# EUROPEAN PATENT SPECIFICATION

(11) **EP 3 498 773 B1**
(45) Date of publication and mention of the grant of the patent: **02.06.2021**
(21) Application number: 18191745.1
(22) Date of filing: 30.08.2018
(51) Int. Cl.: C08L 23/14

(54) **POLYOLEFIN RESIN COMPOSITION COMPRISING DIFFERENT RUBBER COMPONENTS FOR INSULATING ELECTRIC CABLES**
POLYOLEFINHARZZUSAMMENSETZUNG MIT UNTERSCHIEDLICHEN KAUTSCHUKKOMPONENTEN ZUR ISOLIERUNG ELEKTRISCHER KABEL
COMPOSITION DE RÉSINE POLYOLÉFINE COMPRENANT DIFFÉRENTS COMPOSANTS EN CAOUTCHOUC POUR L'ISOLATION DE CÂBLES ÉLECTRIQUES

(30) Priority: 12.12.2017 KR 20170170052
(43) Date of publication of application: 19.06.2019
(73) Proprietor: Hanwha Total Petrochemical Co., Ltd., Seosan-si, Chungcheongnam-do 31900 (KR)
(72) Inventor: LEE, Eunwoong, 31900 Chungcheongnam-do (KR); KIM, BongSeock, 31900 Chungcheongnam-do (KR); CHUN, YongSung, 31900 Chungcheongnam-do (KR)
(74) Representative: Plasseraud IP

(56) References cited:
- EP-A1- 0 695 781
- JP-A- 2016 194 024

## Description

### Technical Field

The present invention relates to a polyolefin resin composition that is excellent in low-temperature impact strength, softness, and thermal stability. In particular, the present invention relates to a polyolefin resin composition that is excellent in low-temperature impact strength and softness since it comprises a large amount of a rubber phase of different rubber components uniformly dispersed in a continuous phase of a polyolefin, as well as excellent in heat resistance by virtue of a stable structure of the rubber phase of different rubber components and the continuous phase of a polyolefin. Therefore, the polyolefin resin composition can be used as an insulation layer of electric cables even without being crosslinked.

### Background Art

Polypropylene, which is a kind of a polyolefin, has excellent mechanical and barrier properties and high thermal stability, whereas it is poor in low-temperature impact strength and has a high rigidity. Therefore, polypropylene is not suitable to be used as an insulation material for electric cables, which requires softness. As a result, polyethylene (e.g., high-density polyethylene, linear low-density polyethylene, low-density polyethylene, and the like) is mainly used as an insulation material for electric power cables for transmission and distribution of electricity, which require both softness and cold tolerance.

However, since polyethylene has a low melting point, it melts or decomposes at high temperatures. Thus, the normal operating temperature of polyethylene is limited up to 90°C. The transmission efficiency of electricity of electric power cables is improved as the normal operating temperature of the electric power cables rises. In order to improve the heat resistance of an insulation material, therefore, a polyethylene, an ethylene-propylene rubber copolymer, an ethylene-propylene-diene rubber copolymer, or the like is crosslinked for this use.

On the other hand, it is difficult for the crosslinked polymers as mentioned above to be recycled when they have reached their service lives. Thus, they must be incinerated or disposed of, or additional costs are to be incurred due to separate facilities required for recycling thereof. In addition, there are several disadvantages in that environmental contamination is likely to occur due to the crosslinked by-products generated in the crosslinking step, that a drying step of the product is further required in the case of moisture curing, and that the processability of the product is limited when the crosslinking is excessive due to the heat generated during extrusion.

Therefore, studies have been made to secure the heat resistance of a polypropylene resin and to concurrently improve the softness and the cold tolerance thereof. For example, U.S. Patent No. 9,416,207 discloses a polypropylene composition that is improved in softness and transparency, in which the composition is prepared by sequentially reacting three types of propylene rubber copolymers. However, since this composition has little improvement in low-temperature impact strength, it is not suitable for the use in electric cables as the cable may be broken when it is installed outdoors or while it is installed or transported depending on the weather. Further, the composition has a low melting point, which lowers the heat resistance thereof. Thus, it is not suitable as an insulation material for electric cables.

Korean Laid-open Patent Publication No. 2014-0040082 discloses a thermoplastic polymer material in which a rubber phase made from an α-olefin comonomer and a propylene copolymer is mixed to secure the softness thereof. However, if the content of the rubber phase is small, it is difficult to install an electric cable that comprises the polymer material as an insulation material since the softness of the polymer material is deteriorated. If the content of the rubber phase is high, there is a problem that the advantages of polypropylene, which have a significant impact on the mechanical properties of an electric cable, are compromised.

In addition, Korean Laid-open Patent Publication No. 1998-0009364 discloses a thermoplastic polyolefin resin composition for interior and exterior parts of automobiles, which comprises a polypropylene resin, an ethylene-propylene rubber, and an ethylene-α-olefin copolymer. This composition, however, has a relatively high melt index of 12.7 to 20.1 g/10 min and a low heat distortion temperature of 61 to 75°C, so that it is not suitable as an insulation material for electric cables.

### Prior Art Documents

### Patent Documents

Patent Document 1: U.S. Patent No. 9,416,207 (August 16, 2016)
Patent Document 2: Korean Laid-open Patent Publication No. 2014-0040082 (April 2, 2014)
Patent Document 3: Korean Laid-open Patent Publication No. 1998-0009364 (April 30, 1998)

### Disclosure of the Invention

### Technical Problem to Solve

Accordingly, an object of the present invention is to provide a polyolefin resin composition, which is excellent in low-temperature impact strength and softness, has heat resistance and mechanical properties peculiar to a polyolefin although it has a large amount of a rubber phase, and has insulation properties similar to those of the conventional materials, so that it can be advantageously used as an insulation layer of electric cables.

### Solution to the Problem

According to an embodiment to achieve the above object, there is provided a polyolefin resin composition as mentioned in the appended set of claims, which comprises (A) 29.8 to 80% by weight, preferably 30 to 80% by weight, of at least one polyolefin resin selected from the group consisting of a propylene homopolymer, an α-olefin-propylene random copolymer, and an ethylene-propylene block copolymer; (B) 10 to 40% by weight of an ethylene-propylene rubber copolymer resin; and (C) 10 to 40% by weight of a C₄-C₈ α-olefin-ethylene rubber copolymer resin, and which has a melt index of 0.5 to 10 g/10 min when measured at 230°C under a load of 2.16 kg, a flexural strength of 100 to 800 MPa, and a melting temperature of 140 to 170°C, wherein the total content of the resins (B) and (C) is in the range of 20 to 70% by weight.

Preferably, the α-olefin monomer, which constitutes the α-olefin-propylene random copolymer, is at least one selected from the group consisting of ethylene, 1-butene, 1-hexene, and 1-octene.

More preferably, the α-olefin monomer, which constitutes the α-olefin-propylene random copolymer, is ethylene.

More preferably, the content of the α-olefin monomer in the α-olefin-propylene random copolymer is chosen such that the melting temperature of the α-olefin-propylene random copolymer is in the range of 140 to 170°C.

More preferably, the content of the α-olefin monomer in the α-olefin-propylene random copolymer is 2 to 20% by weight in the case of ethylene and 2 to 10% by weight in the case of 1-butene.

Preferably, the content of ethylene in the ethylene-propylene block copolymer is 2 to 25% by weight, and the content of propylene in the ethylene-propylene block copolymer is 75 to 98% by weight.

The polyolefin resin (A) has a melt index of 1 to 10 g/10 min when measured at 230°C under a load of 2.16 kg, a flexural strength of 500 to 2,000 MPa, and a melting enthalpy of 40 to 100 J/g.

The content of ethylene in the ethylene-propylene rubber copolymer resin (B) is 5 to 30% by weight, and the content of propylene in the ethylene-propylene rubber copolymer resin (B) is 70 to 95% by weight.

Preferably, the ethylene-propylene rubber copolymer resin (B) has a melt index of 0.5 to 15 g/10 min when measured at 230°C under a load of 2.16 kg, a flexural strength of 100 MPa or less, and a melting enthalpy of 20 J/g or less.

Preferably, the C₄-C₈ α-olefin, which constitutes the C₄-C₈ α-olefin-ethylene rubber copolymer resin (C), is at least one selected from the group consisting of 1-butene, 1-pentene, 1-hexene, 1-heptene, and 1-octene.

More preferably, the C₄-C₈ α-olefin, which constitutes the C₄-C₈ α-olefin-ethylene rubber copolymer resin (C), is 1-butene, 1-hexene, or 1-octene.

More preferably, the content of the C₄-C₈ α-olefin monomer in the C₄-C₈ α-olefin-ethylene rubber copolymer resin (C) is 20 to 45% by weight in the case of 1-butene, 10 to 30% by weight in the case of 1-hexene, and 5 to 20% by weight in the case of 1-octene.

The C₄-C₈ α-olefin-ethylene rubber copolymer resin (C) has a melt index of 0.5 to 20 g/10 min when measured at 230°C under a load of 2.16 kg, a flexural strength of 100 MPa or less, and a melting enthalpy of 10 J/g or less.

Preferably, the polyolefin resin composition of the present invention comprises a propylene monomer in an amount of 30 to 75% by weight, an ethylene monomer in an amount of 20 to 50% by weight, and other α-olefin monomers in an amount of 5 to 20% by weight.

Preferably, the polyolefin resin composition of the present invention comprises at least one additive selected from the group consisting of an antioxidant, a neutralizing agent, a transparent nucleating agent, and a long-term heat stabilizer.

More preferably, the content of the additive is 0.2 to 1% by weight based on the total weight of the polyolefin resin composition.

Preferably, the polyolefin resin composition of the present invention has an IZOD impact strength of 2.0 kgf cm/cm or more when measured at -40°C.

Preferably, the polyolefin resin composition of the present invention has a volume resistivity of greater than 10¹⁵ Ω·cm.

Preferably, a solvent extract as a rubber component in the polyolefin resin composition of the present invention has an intrinsic viscosity of 1.0 to 4.0 dl/g.

### Advantageous Effects of the Invention

The polyolefin resin composition of the present invention is excellent in low-temperature impact strength and softness since a rubber phase of different rubber components in a large amount is uniformly dispersed in a continuous phase of a polyolefin, is excellent in mechanical properties since no phase separation occurs between the continuous phase and the rubber phase, and is excellent in heat resistance by virtue of a stable structure of the rubber phase of different rubber components and the continuous phase of a polyolefin. In addition, the polyolefin resin composition is excellent in insulation properties. Therefore, the polyolefin resin composition of the present invention can be used as a material for an insulation layer of electric cables without crosslinking thereof. The polyolefin resin composition is also environmentally friendly since it can be recycled.

### Brief Description of the Drawings

Fig. 1 is a graph that compares the low-temperature IZOD impact strengths of specimens prepared from the polyolefin resin compositions of Examples 2 and 3 and those prepared from the polyolefin resin compositions of Comparative Examples 3 and 4.
Fig. 2 is a photograph of a cross-section of a specimen prepared from the polyolefin resin composition of Example 3 as observed by scanning electron microscope.

### Detailed Description for Carrying out the Invention

Hereinafter, the present invention will be described in more detail.

The polyolefin resin composition according to an embodiment of the present invention comprises (A) 29.8 to 80% by weight, preferably 30 to 80% by weight, of at least one polyolefin resin selected from the group consisting of a propylene homopolymer, an α-olefin-propylene random copolymer, and an ethylene-propylene block copolymer; (B) 10 to 40% by weight of an ethylene-propylene rubber copolymer resin; and (C) 10 to 40% by weight of a C₄-C₈ α-olefin-ethylene rubber copolymer resin, and which has a melt index of 0.5 to 10 g/10 min when measured at 230°C under a load of 2.16 kg, a flexural strength of 100 to 800 MPa, and a melting temperature of 140 to 170°C, wherein the total content of the resins (B) and (C) is in the range of 20 to 70% by weight.

In the polyolefin resin composition of the present invention, the polyolefin resin (A) that constitutes a continuous phase is at least one resin selected from the group consisting of a propylene homopolymer, an α-olefin-propylene random copolymer, and an ethylene-propylene block copolymer.

Here, the α-olefin monomer, which constitutes the α-olefin-propylene random copolymer, may be at least one selected from the group consisting of ethylene, 1-butene, 1-hexene, and 1-octene. Preferably, the α-olefin monomer, which constitutes the α-olefin-propylene random copolymer, may be ethylene.

The content of the α-olefin monomer in the α-olefin-propylene random copolymer may be chosen such that the melting temperature of the α-olefin-propylene random copolymer is in the range of 140 to 170°C. For example, the content of the α-olefin monomer in the α-olefin-propylene random copolymer may be 2 to 20% by weight in the case of ethylene and 2 to 10% by weight in the case of 1-butene.

The content of ethylene in the ethylene-propylene block copolymer may be 2 to 25% by weight, and the content of propylene in the ethylene-propylene block copolymer may be 75 to 98% by weight.

The polyolefin resin (A) has a melt index of 1 to 10 g/10 min when measured at 230°C under a load of 2.16 kg, a flexural strength of 500 to 2,000 MPa, and a melting enthalpy of 40 to 100 J/g.

Examples of the polyolefin resin (A) commercially available include HF11PT (a propylene homopolymer composed of 100% by weight of propylene; Hanwha Total Petrochemical Co., Ltd.), RF401 (an ethylene-propylene random copolymer composed of 98% by weight of propylene and 2% by weight of ethylene, Hanwha Total Petrochemical Co., Ltd.), CF330 (an ethylene-propylene block copolymer composed of 94% by weight of propylene and 6% by weight of ethylene, Hanwha Total Petrochemical Co., Ltd.), and CF309 (an ethylene-propylene block copolymer composed of 94% by weight of propylene and 6% by weight of ethylene, Hanwha Total Petrochemical Co., Ltd.). But it is not limited thereto.

In the polyolefin resin composition of the present invention, one of the resins that constitute a rubber phase is an ethylene-propylene rubber copolymer resin (B). The content of ethylene in the ethylene-propylene rubber copolymer resin (B) is 5 to 30% by weight, and the content of propylene in the ethylene-propylene rubber copolymer resin (B) is 70 to 95% by weight.

The ethylene-propylene rubber copolymer resin (B) may have a melt index of 0.5 to 15 g/10 min when measured at 230°C under a load of 2.16 kg, a flexural strength of 100 MPa or less, and a melting enthalpy of 20 J/g or less.

Further, when the resin (B) is dissolved in xylene at a concentration of 1% at 140°C for 1 hour and left at room temperature for 2 hours, the solvent extract may be 75 to 100% by weight based on the initial weight of the resin (B). The intrinsic viscosity of the solvent extract may be 1.0 to 3.0 dl/g when measured in a decalin solution at 135°C.

Examples of the ethylene-propylene rubber copolymer resin (B) commercially available include Versify (Dow), Vistamaxx (ExxonMobil), Tafmer (Mitsui), and KEP (Kumho Petrochemical). But it is not limited thereto.

In the polyolefin resin composition of the present invention, the other of the resins that constitute a rubber phase is at least one C₄-C₈ α-olefin-ethylene rubber copolymer resin (C).

Here, the C₄-C₈ α-olefin, which constitutes the C₄-C₈ α-olefin-ethylene rubber copolymer resin (C), may be at least one selected from the group consisting of 1-butene, 1-pentene, 1-hexene, 1-heptene, and 1-octene. Preferably, the C₄-C₈ α-olefin, which constitutes the C₄-C₈ α-olefin-ethylene rubber copolymer resin (C), may be 1-butene, 1-hexene, or 1-octene.

The content of the C₄-C₈ α-olefin monomer in the C₄-C₈ α-olefin-ethylene rubber copolymer resin (C) may be 20 to 45% by weight in the case of 1-butene, 10 to 30% by weight in the case of 1-hexene, and 5 to 20% by weight in the case of 1-octene.

The C₄-C₈ α-olefin-ethylene rubber copolymer resin (C) has a melt index of 0.5 to 20 g/10 min when measured at 230°C under a load of 2.16 kg, a flexural strength of 100 MPa or less, and a melting enthalpy of 10 J/g or less.

Further, when the resin (C) is dissolved in xylene at a concentration of 1% at 140°C for 1 hour and left at room temperature for 2 hours, the solvent extract may be 75 to 100% by weight based on the initial weight of the resin (C). The intrinsic viscosity of the solvent extract may be 1.0 to 3.0 dl/g when measured in a decalin solution at 135°C. The glass transition temperature of the solvent extract may be 40°C or lower.

Examples of the C₄-C₈ α-olefin-ethylene rubber copolymer resin (C) commercially available include Engage (Dow), Exact (ExxonMobil), Lucene (LG Chemical), Tafmer (Mitsui), and Solumer (SK Chemicals). But it is not limited thereto.

In the polyolefin resin composition of the present invention, the content of the polyolefin resin (A), which constitutes a continuous phase, is 29.8 to 80% by weight, preferably 30 to 80% by weight, based on the weight of the composition. If the content of the polyolefin resin (A) is less than 29.8% by weight, it is difficult that a continuous phase is formed. If the content of the polyolefin resin (A) is more than 80% by weight, the flexural strength is large, thereby deteriorating the softness of the composition.

In the polyolefin resin composition of the present invention, the content of the ethylene-propylene rubber copolymer resin (B) and that of the C₄-C₈ α-olefin-ethylene rubber copolymer resin (C), which constitute a rubber phase, are 10 to 40% by weight, respectively. If the content of each of the resin (B) and the resin (C) exceeds 40% by weight, one rubber component is in an excessive amount. Thus, the heat resistance, tensile strength, flexural strength, and the like of the composition, which depend on the structure of the continuous phase of the polypropylene-based resin, may deteriorate. If the content of each of the resin (B) and the resin (C) is less than 10% by weight, the content of the polyolefin resin (A) is high, which gives rise to a high flexural strength, resulting in a reduction in the softness. Further, the effect of improvements in the low-temperature impact strength that attributes to the resin (B) and the resin (C) may not be expected.

In the polyolefin resin composition of the present invention, the total content of the resin (B) and the resin (C) is in the range of 20 to 70% by weight. If the total content of these two resins, which constitute the rubber phase, exceeds 70% by weight, the entire rubber phase is in an excessive amount. Thus, the heat resistance, tensile strength, flexural strength, and the like of the composition, which depend on the structure of the continuous phase of the polypropylene-based resin, may deteriorate. If the total content of these two resins, which constitute the rubber phase, is less than 20% by weight, the flexural strength is high, resulting in a reduction in the softness. Further, the effect of improvements in the low-temperature impact strength that attributes to the resin (B) and the resin (C) may not be expected.

When the polyolefin resin composition of the present invention is dissolved in a xylene solvent and analyzed, the polyolefin resin composition comprises a propylene monomer in an amount of 30 to 75% by weight, an ethylene monomer in an amount of 20 to 50% by weight, and other α-olefin monomers in an amount of 5 to 20% by weight. When such a composition ratio is satisfied, the continuous phase is composed of propylene, which renders excellent the heat resistance and the electric characteristics of the composition; the composition has a low glass transition temperature due to the α-olefin monomers, which improves the low-temperature impact strength; and the content of the rubber copolymer in the continuous phase is increased due to the content of ethylene, which improves the softness of the composition. If the content of propylene is lower than the above range, the continuous phase is composed of other monomers, which deteriorates the heat resistance characteristics of the composition. If the content of propylene is greater than the above range, the flexural strength of the composition is high, which impairs the convenience at the time of installation of electric cables and lowers the impact strength characteristics of the composition.

In the meantime, the polyolefin resin composition of the present invention may further comprise such an additive as an antioxidant, a neutralizing agent, a transparent nucleating agent, and a long-term heat stabilizer, in addition to the above-mentioned resin components, within a range that does not contradict the gist of the present invention. For example, pentaerythritol tetrakis(3,5-di-t-butyl-4-hydroxyhydrocinnamate; Irganox 1010) manufactured by Ciba Specialty Chemicals may be used as an antioxidant, and hydrotalcite (Hycite 713) manufactured by Ciba Specialty Chemicals may be used as a neutralizing agent for removing any catalyst residue.

Preferably, the content of the additive may be 0.2 to 1% by weight based on the total weight of the polyolefin resin composition.

The polyolefin resin composition of the present invention has a melt index of 0.5 to 10 g/10 min when measured at 230°C under a load of 2.16 kg. If the melt index of the polyolefin resin composition is less than 0.5 g/10 min, the load applied in the extrusion step may increase, resulting in a low productivity. If the melt index of the polyolefin resin composition exceeds 10 g/10 min, the melt tension of the polyolefin resin composition is low, so that the polyolefin resin composition may fall while it is being processed. As a result, the insulation layer thus formed may have an uneven appearance, along with significantly impaired electric characteristics.

The polyolefin resin composition of the present invention has a flexural strength of 100 to 800 MPa. If the flexural strength is lower than the above range, the heat resistance and the strength of the composition, which attribute to a polypropylene resin, are lowered. If the flexural strength is greater than the above range, the electric cables finally manufactured is not readily bent due to the high rigidity thereof. Thus, it is difficult to transport and install the electric cables.

The polyolefin resin composition of the present invention has a melting temperature of 140 to 170°C. If the melting temperature of the polyolefin resin composition is lower than 140°C, the insulation layer may be partially melted due to an increase in the temperature when a transient overvoltage is applied. As a result, the electric cable may be broken. If the melting temperature of the polyolefin resin composition is higher than 170°C, the flexural strength is too large, so that the softness of the composition may not be sufficiently improved.

Meanwhile, the polyolefin resin composition of the present invention may have an IZOD impact strength of 2.0 kgf cm/cm or more when measured at -40°C according to the ASTM. In general, the low-temperature impact strength of a propylene homopolymer or an ethylene-propylene block copolymer hinges on the ratio of ethylene to propylene in the continuous phase and in the rubber phase. The higher the content of ethylene, the higher the low-temperature impact strength. However, in the case where the continuous phase is polymerized from propylene and the content of ethylene is increased at the same time, ethylene may be polymerized in the continuous phase, thereby deteriorating the heat resistance of the continuous phase. Polypropylene compositions commercially available may have a glass transition temperature present in the ranges of 0 to 10°C and -30 to -20°C. Thus, the impact strength of the composition would not be improved at -40°C even if the content of the rubber phase is increased, because the impact strength is irrelevant to the content of the rubber phase. Therefore, the conventional polypropylene compositions may normally have an IZOD impact strength of less than 2.0 kgf cm/cm when measured at -40°C according to the ASTM.

In contrast, in the polyolefin resin composition of the present invention, which comprises a large amount of a rubber phase of different rubber components uniformly dispersed in a continuous phase of polypropylene and has a high content of ethylene in the ethylene-α-olefin rubber, the glass transition temperature is observed at -40°C or lower. Hence, the IZOD impact strength of the composition at -40°C can be 2.0 kgf cm/cm or more.

The polyolefin resin composition of the present invention may have a volume resistivity of greater than 10¹⁵ Ω·cm or more, preferably 10¹⁶ Ω·cm or more. Thus, it is suitable for use as an insulation material for high-voltage electric cables. If the content of the rubber phase in the polyolefin resin composition is excessive, the volume resistivity of the composition becomes less than 10¹⁵ Ω·cm, so that the composition is not suitable for use an insulation material.

Preferably, in the polyolefin resin composition of the present invention, the solvent extract as a rubber component has an intrinsic viscosity of 1.0 to 4.0 dl/g. If the intrinsic viscosity is less than 1 dl/g, the impact strength of the composition attributable to the rubber phase would be not improved. If the intrinsic viscosity exceeds 4.0 dl/g, the processability of the composition may be impaired, and whitening may also occur.

### Example

Hereinafter, the present invention is explained in detail by the following Examples. However, the following Examples are intended to further illustrate the present invention. The scope of the present invention is not limited thereto only.

The resin components and the additives used in the Examples and the Comparative Examples are as follows.
A1: Propylene homopolymer composed of 100% by weight of propylene (HF11PT, Hanwha Total).
A2: Ethylene-propylene random copolymer composed of 98% by weight of propylene and 2% by weight of ethylene (RF401, Hanwha Total).
A3: Ethylene-propylene block copolymer composed of 94% by weight of propylene and 6% by weight of ethylene (CF330, Hanwha Total).
B1: Ethylene-propylene rubber copolymer composed of 75% by weight of propylene and 25% by weight of ethylene (having a melt index of 2 g/10 min and a Tm of 160°C).
B2: Ethylene-propylene rubber copolymer composed of 80% by weight of propylene and 20% by weight of ethylene (Vistamaxx 6202, ExxonMobil).
B3: Ethylene-propylene rubber copolymer composed of 85% by weight of propylene and 15% by weight of ethylene (Versifi 2400, Dow).
C1: 1-hexene-ethylene rubber copolymer composed of 15% by weight of 1-hexene and 85% by weight of ethylene and prepared by pre-polymerization of a metallocene catalyst and polymerization in the absence of a hydrocarbon solvent at a temperature of 70 to 80°C and a pressure of 10 to 30 atm, which has a melt index of 3 g/10 min and a Tm of 115°C.
C2: 1-octene-ethylene rubber copolymer composed of 15% by weight of 1-octene and 85% of ethylene (Engage 8842, Dow).
Antioxidant: pentaerythritol tetrakis(3,5-di-t-butyl-4-hydroxyhydrocinnamate (Irganox 1010, Ciba Specialty Chemicals).
Neutralizing agent: hydrotalcite (Hycite 713, Ciba Specialty Chemicals).

### Example 1

A polyolefin resin composition composed of (A) 74.8% by weight of the polyolefin resin A1; (B) 10% by weight of the rubber copolymer resin B1; (C) 15% by weight of the rubber copolymer resin C1; and 0.2% by weight of the antioxidant and the neutralizing agent was prepared in the following manner.

The three polyolefin resins (A), (B), and (C), the antioxidant, and the neutralizing agent were mixed in a Henschel mixer (SSM-75) for 30 minutes; melt-extruded through a twin-screw extruder (TEK-30, Platek) at 230°C; and pelletized using a pelletizer. The pellets of the polyolefin resin composition thus prepared were injection molded with a 150-ton injection molding machine (selexte 150) to specimens in accordance with ASTM No. 4.

### Examples 2 to 4 and Comparative Examples 1 to 6

Each composition was prepared in the same manner as in Example 1, except that the kind and content of the resins constituting the composition were changed as shown in Table 1 below. The numbers shown in Table 1 below indicate the contents in percent by weight.

**[Table 1]**

| | Example | | | | Comparative Example | | | | | |
|---|---|---|---|---|---|---|---|---|---|---|
| | 1 | 2 | 3 | 4 | 1 | 2 | 3 | 4 | 5 | 6 |
| Resin (A) | A1 | A1 | A2 | A3 | A1 | A2 | A1 | A2 | A3 | A1 |
| | 74.8 | 49.8 | 39.8 | 29.8 | 74.8 | 89.8 | 49.8 | 39.8 | 29.8 | 9.8 |
| Resin (B) | B1 | B1 | B2 | B1 | B3 | B3 | B3 | B2 | B1 | B2 |
| | 10 | 15 | 20 | 35 | 25 | 10 | 50 | 60 | 15 | 45 |
| Resin (C) | C1 | C1 | C2 | C2 | - | - | - | - | C1 | C1 |
| | 15 | 35 | 40 | 35 | - | - | - | - | 55 | 45 |
| Antioxidant/ neutralizing agent | 0.2 | 0.2 | 0.2 | 0.2 | 0.2 | 0.2 | 0.2 | 0.2 | 0.2 | 0.2 |

The physical properties of the compositions prepared in Examples 1 to 4 and Comparative Examples 1 to 6 were measured according to the following methods and standards. The results are shown in Table 2 below.

### (1) Melt index

The melt index of a composition was measured at 230°C under a load of 2.16 kg according to ASTM D 1238 using a CEAST MF10 instrument.

### (2) Content of a xylene soluble (or solvent extract)

A polypropylene resin was dissolved in xylene at a concentration of 1% at 140°C for 1 hour and left at room temperature for 2 hours for extraction. The weight of the extract was measured and expressed in percent based on the total weight of the polypropylene resin.

### (3) Intrinsic viscosity of a xylene soluble

The intrinsic viscosity of a xylene soluble was measured in a decalin solution at 135°C using a viscometer.

### (4) Melting temperature

A sample was kept isothermal at 200°C for 10 minutes using a differential scanning calorimeter (DSC; Q2000, TA Instrument) to remove the thermal history and then cooled from 200°C to 30°C at a rate of 10°C per minute for crystallization thereof to impart the same thermal history. Then, the sample was kept isothermal at 30°C for 10 minutes, followed by heating the sample at a rate of 10°C per minute. The melting temperature (Tm) was obtained from the peak temperature.

### (5) Flexural modulus (FM)

A specimen prepared in accordance with ASTM D 790 was injection molded and left at 23 ± 2°C and a relative humidity of 50 ± 5% for 48 hours. It was then subjected to measurement with a UTM equipment within 72 hours. The distance between the support points of the specimen was 48 mm, and the speed was at 5 mm/min.

### (6) Cold tolerance

Specimens having a length of 38 mm, a width of 6 mm, and a thickness of 2 mm were obtained by injection molding at 240°C. Five specimens were subjected to the cold tolerance test -40°C to check the number of specimens broken. If the number of the broken specimens was 1 or less, it was evaluated as a pass. If the number of the broken specimens was greater than 1, it was evaluated as a failure.

### (7) IZOD impact strength at -40°C

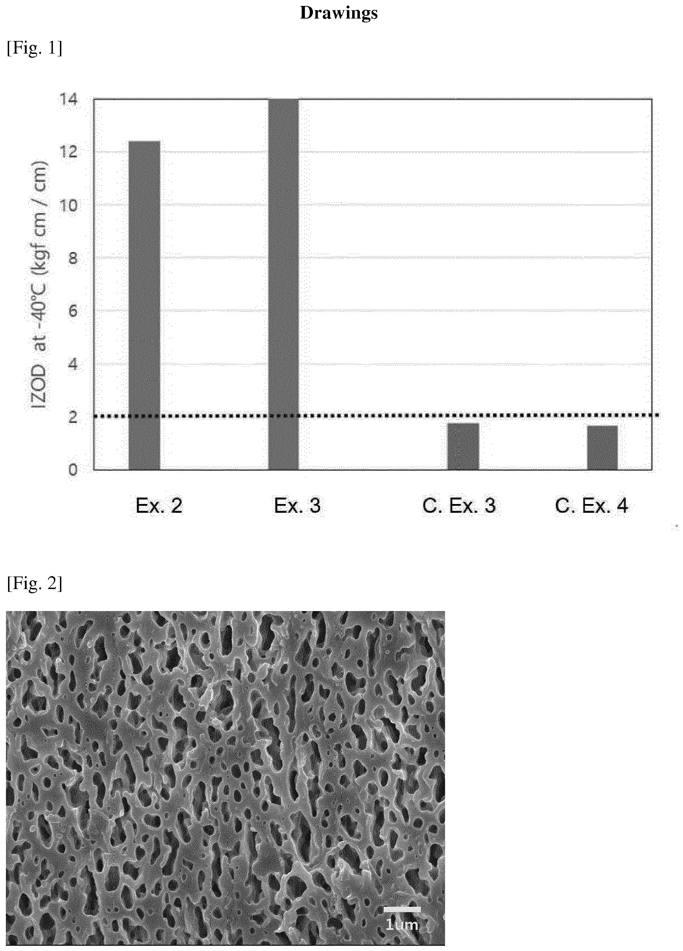

More than five specimens were prepared by injection molding and left at 23 ± 2°C and a relative humidity of 50 ± 5% for 48 hours. They were then subjected to the test within 72 hours. A sample with a notch as specified in ASTM D256 was stored in a freezer kept at -40°C for at least 2 hours and then tested within 30 minutes. A pendulum was fixed at the specified position. Then, the sample was hit by the pendulum having a weight of 30 kg while it was swung. When the sample was broken, the amount of energy was recorded. This test was repeated five times, an average value thereof was calculated. The IZOD impact strengths of the compositions prepared in Examples 2 and 3 and those of the compositions prepared in Comparative Examples 3 and 4 are shown in Fig. 1.

### (8) Heat deformation

A specimen having a length of 30 mm, a width of 15 mm, and a thickness of 2 mm was prepared by injection molding at 240°C. According to the KS C IEC 60811-508 method, a load of 1.6 kg was applied to the specimen at 130°C for 6 hours, and the deformed thickness was measured. The deformation rate was obtained by dividing the deformed thickness by the initial thickness. If the heat deformation rate is less than 50%, it was evaluated as a pass. If the heat deformation rate is 50% or more, it was evaluated as a failure.

### (9) Alternating current (AC) breakdown voltage

A polypropylene specimen was prepared as a sheet having a thickness of 200 µm using a laboratory extruder (HAAKE extruder). The AC breakdown voltage was measured at room temperature using spherical electrodes having a diameter of 12.7 mm according to ASTM D 149-92.

### (10) Volume resistivity

According to the ASTM D257 method, a flat sheet was prepared, and its volume resistivity was measured using HIRESTA UX8000 from Mitsubishi Chemical.

### (11) Dispersion state of a rubber phase

The cross-section of a specimen prepared from the polyolefin resin composition of Example 3 was treated with xylene to dissolve the rubber phase. Then, it was observed with a scanning electron microscope. The photograph obtained thereby is shown in Fig. 2.

### (12) Tensile strength and elongation

A specimen obtained by injection molding in accordance with ASTM No. 4 was left at 23 ± 2°C and a relative humidity of 50 ± 5% for 48 hours. It was then measured with a UTM equipment within 72 hours. The load was measured while the specimen was stretched at a speed of 5 mm/min. The tensile strength and elongation at fracture were obtained by measuring the load and length at the time when the stretched specimen was broken.

**[Table 2]**

| Item | Example | | | | Comparative Example | | | | | |
|---|---|---|---|---|---|---|---|---|---|---|
| | 1 | 2 | 3 | 4 | 1 | 2 | 3 | 4 | 5 | 6 |
| Melt index (g/10 min) | 2.0 | 3.0 | 5.0 | 7.0 | 2.0 | 3.0 | 8.0 | 7.0 | 8.0 | 10.0 |
| Content of xylene soluble (wt. %) | 24 | 49 | 62 | 77 | 24 | 9 | 51 | 64 | 80 | - |
| Intrinsic viscosity of xylene soluble (dl/g) | 1.8 | 2.0 | 1.8 | 1.9 | 1.8 | 1.5 | 1.8 | 1.9 | 2.0 | 2.1 |
| Melting temp. (□) | 162 | 161 | 151 | 150 | 162 | 152 | 151 | NA | NA | NA |
| Flexural modulus (kgf/cm²) | 8000 | 3000 | 2200 | 2000 | 8500 | 7500 | 2000 | 800 | NA | NA |
| Tensile strength (kgf/cm²) | 250 | 220 | 190 | 170 | 250 | 260 | 150 | 80 | NA | NA |
| Elongation (%) | 550 | 450 | 400 | 380 | 550 | 600 | 400 | 300 | 200 | NA |
| AC breakdown voltage (kV) | 71 | 65 | 61 | 60 | 71 | 77 | 57 | 51 | 47 | 38 |
| Cold tolerance test | P | P | P | P | F | F | F | F | P | F |
| Heat deformation (%) | 3 | 15 | 27 | 35 | 3 | 2 | 42 | 53 | 65 | 100 |
| Volume resistivity (Ω·cm) | 10¹⁶ to 10¹⁸ | 10¹⁶ to 10¹⁷ | 10¹⁵ to 10¹⁶ | 10¹⁵ to 10¹⁶ | 10¹⁶ to 10¹⁸ | 10¹⁶ to 10¹⁸ | 10¹⁵ to 10¹⁶ | 10¹⁴ to 10¹⁵ | 10¹³ to 10¹⁴ | 10¹³ to 10¹⁴ |

| | | | | | | | | | | |
|---|---|---|---|---|---|---|---|---|---|---|
| NA: Low values not measurable; P: pass, and F: failure | | | | | | | | | | |

As confirmed from Table 2 and Fig. 1, the polyolefin resin compositions prepared in the Examples, which fall within the scope of the present invention, were excellent in low-temperature impact strength and softness, were excellent in mechanical properties since no phase separation occurs between the continuous phase and the rubber phase, and were excellent in heat resistance by virtue of a stable structure of the rubber phase of different rubber components and the continuous phase of a polyolefin. In addition, the polyolefin resin compositions were excellent in insulation properties. In addition, as confirmed from Fig. 2, the rubber phase of different rubber components was uniformly dispersed in the continuous phase of a polyolefin in the polyolefin resin compositions prepared in the Examples.

In contrast, the polyolefin resin compositions prepared in the Comparative Examples, which do not fall within the scope of the present invention, were poor in terms of at least one of the properties as evaluated above.

## Claims

1. A polyolefin resin composition, which comprises: (A) 29.8 to 80% by weight, preferably 30 to 80% by weight, of at least one polyolefin resin selected from the group consisting of a propylene homopolymer, an α-olefin-propylene random copolymer, and an ethylene-propylene block copolymer; (B) 10 to 40% by weight of an ethylene-propylene rubber copolymer resin; and (C) 10 to 40% by weight of a C₄-C₈ α-olefin-ethylene rubber copolymer resin, and which has a melt index of 0.5 to 10 g/10 min when measured at 230°C under a load of 2.16 kg, a flexural strength of 100 to 800 MPa, and a melting temperature of 140 to 170°C,
wherein the total content of the resins (B) and (C) is in the range of 20 to 70% by weight,
wherein the polyolefin resin (A) has a melt index of 1 to 10 g/10 min when measured at 230°C under a load of 2.16 kg, a flexural strength of 500 to 2,000 MPa, and a melting enthalpy of 40 to 100 J/g,
wherein the content of ethylene in the ethylene-propylene rubber copolymer resin (B) is 5 to 30% by weight, and the content of propylene in the ethylene-propylene rubber copolymer resin (B) is 70 to 95% by weight, and
wherein the C₄-C₈ α-olefin-ethylene rubber copolymer resin (C) has a melt index of 0.5 to 20 g/10 min when measured at 230°C under a load of 2.16 kg, a flexural strength of 100 MPa or less, and a melting enthalpy of 10 J/g or less.

2. The polyolefin resin composition of claim 1, wherein the α-olefin monomer, which constitutes the α-olefin-propylene random copolymer, is at least one selected from the group consisting of ethylene, 1-butene, 1-hexene, and 1-octene, preferably is ethylene.

3. The polyolefin resin composition of claim 2, wherein the content of the α-olefin monomer in the α-olefin-propylene random copolymer is 2 to 20% by weight in the case of ethylene and 2 to 10% by weight in the case of 1-butene.

4. The polyolefin resin composition of any one of claims 1 to 3, wherein the content of ethylene in the ethylene-propylene block copolymer is 2 to 25% by weight, and the content of propylene in the ethylene-propylene block copolymer is 75 to 98% by weight.

5. The polyolefin resin composition of any one of claims 1 to 4, wherein the C₄-C₈ α-olefin, which constitutes the C₄-C₈ α-olefin-ethylene rubber copolymer resin (C), is at least one selected from the group consisting of 1-butene, 1-pentene, 1-hexene, 1-heptene, and 1-octene, preferably is 1-butene, 1-hexene, or 1-octene.

6. The polyolefin resin composition of claim 5, wherein the content of the C₄-C₈ α-olefin monomer in the C₄-C₈ α-olefin-ethylene rubber copolymer resin (C) is 20 to 45% by weight in the case of 1-butene, 10 to 30% by weight in the case of 1-hexene, and 5 to 20% by weight in the case of 1-octene.

7. The polyolefin resin composition of any one of claims 1 to 6, which comprises a propylene monomer in an amount of 30 to 75% by weight, an ethylene monomer in an amount of 20 to 50% by weight, and other α-olefin monomers in an amount of 5 to 20% by weight.

8. The polyolefin resin composition of any one of claims 1 to 7, which further comprises at least one additive selected from the group consisting of an antioxidant, a neutralizing agent, a transparent nucleating agent, and a long-term heat stabilizer.

9. The polyolefin resin composition of claim 8, wherein the content of the additive is 0.2 to 1% by weight based on the total weight of the polyolefin resin composition.

10. The polyolefin resin composition of any one of claims 1 to 9, which has an IZOD impact strength of 2.0 kgf cm/cm or more when measured at -40°C.

11. The polyolefin resin composition of any one of claims 1 to 10, wherein a solvent extract as a rubber component in the polyolefin resin composition has an intrinsic viscosity of 1.0 to 4.0 dl/g.

## Patentansprüche

1. Polyolefinharzzusammensetzung, die umfasst: (A) 29,8 bis 80 Gew.-%, vorzugsweise 30 bis 80 Gew.-%, mindestens eines Polyolefinharzes, ausgewählt aus der Gruppe bestehend aus einem Propylenhomopolymer, einem α-Olefin-Propylen-Zufallscopolymer und einem Ethylen-Propylen-Blockcopolymer; (B) 10 bis 40 Gew.-% eines Ethylen-Propylen-Kautschuk-Copolymerharzes; und (C) 10 bis 40 Gew.-% eines C₄-C₈-α-Olefin-Ethylen-Kautschuk-Copolymerharzes, und die einen Schmelzindex von 0,5 bis 10 g/10 min, gemessen bei 230 °C unter einer Last von 2,16 kg, eine Biegefestigkeit von 100 bis 800 MPa und eine Schmelztemperatur von 140 bis 170 °C aufweist,
wobei der Gesamtgehalt der Harze (B) und (C) im Bereich von 20 bis 70 Gew.-% liegt, wobei das Polyolefinharz (A) einen Schmelzindex von 1 bis 10 g/10 min, gemessen bei 230 °C unter einer Last von 2,16 kg, eine Biegefestigkeit von 500 bis 2.000 MPa und eine Schmelzenthalpie von 40 bis 100 J/g aufweist,
wobei der Gehalt an Ethylen in dem Ethylen-Propylen-Kautschuk-Copolymerharz (B) 5 bis 30 Gew.-% beträgt und der Gehalt an Propylen in dem Ethylen-Propylen-Kautschuk-Copolymerharz (B) 70 bis 95 Gew.-% beträgt und
wobei das C₄-C₈-α-Olefin-Ethylen-Kautschuk-Copolymerharz (C) einen Schmelzindex von 0,5 bis 20 g/10 min, gemessen bei 230 °C unter einer Last von 2,16 kg, eine Biegefestigkeit von 100 MPa oder weniger und eine Schmelzenthalpie von 10 J/g oder weniger aufweist.

2. Polyolefinharzzusammensetzung nach Anspruch 1, wobei das α-Olefinmonomer, das das α-Olefin-Propylen-Zufallscopolymer bildet, mindestens eines ist, ausgewählt aus der Gruppe bestehend aus Ethylen, 1-Buten, 1-Hexen und 1-Octen, vorzugsweise Ethylen ist.

3. Polyolefinharzzusammensetzung nach Anspruch 2, wobei der Gehalt des α-Olefinmonomers im α-Olefin-Propylen-Zufallscopolymer im Fall von Ethylen 2 bis 20 Gew.-% und im Fall von 1-Buten 2 bis 10 Gew.-% beträgt.

4. Polyolefinharzzusammensetzung nach einem der Ansprüche 1 bis 3, wobei der Gehalt an Ethylen in dem Ethylen-Propylen-Blockcopolymer 2 bis 25 Gew.-% beträgt und der Gehalt an Propylen in dem Ethylen-Propylen-Blockcopolymer 75 bis 98 Gew.-% beträgt.

5. Polyolefinharzzusammensetzung nach einem der Ansprüche 1 bis 4, wobei das C₄-C₈-α-Olefin, das das C₄-C₈-α-Olefin-Ethylen-Kautschuk-Copolymerharz (C) bildet, mindestens eines ist, ausgewählt aus der Gruppe bestehend aus 1-Buten, 1-Penten, 1-Hexen, 1-Hepten und 1-Octen, vorzugsweise 1-Buten, 1-Hexen oder 1-Octen ist.

6. Polyolefinharzzusammensetzung nach Anspruch 5, wobei der Gehalt des C₄-C₈-α-Olefinmonomers im C₄-C₈-α-Olefin-Ethylen-Kautschuk-Copolymerharz (C) im Fall von 1-Buten 20 bis 45 Gew.-%, im Fall von 1-Hexen 10 bis 30 Gew.-% und im Fall von 1-Octen 5 bis 20 Gew.-% beträgt.

7. Polyolefinharzzusammensetzung nach einem der Ansprüche 1 bis 6, die ein Propylenmonomer in einer Menge von 30 bis 75 Gew.-%, ein Ethylenmonomer in einer Menge von 20 bis 50 Gew.-% und andere α-Olefinmonomere in eine Menge von 5 bis 20 Gew.-% umfasst.

8. Polyolefinharzzusammensetzung nach einem der Ansprüche 1 bis 7, die ferner mindestens ein Additiv umfasst, ausgewählt aus der Gruppe bestehend aus einem Antioxidationsmittel, einem Neutralisationsmittel, einem transparenten Keimbildner und einem langfristigen Wärmestabilisator.

9. Polyolefinharzzusammensetzung nach Anspruch 8, wobei der Gehalt des Additivs 0,2 bis 1 Gew.-% beträgt, bezogen auf das Gesamtgewicht der Polyolefinharzzusammensetzung.

10. Polyolefinharzzusammensetzung nach einem der Ansprüche 1 bis 9, die eine IZOD-Schlagfestigkeit von 2,0 kgf cm/cm oder mehr aufweist, gemessen bei -40 °C.

11. Polyolefinharzzusammensetzung nach einem der Ansprüche 1 bis 10, wobei ein Lösungsmittelextrakt als Kautschukkomponente in der Polyolefinharzzusammensetzung eine intrinsische Viskosität von 1,0 bis 4,0 dl/g aufweist.

## Revendications

1. Composition de résine de polyoléfine, qui comprend : (A) 29,8 à 80 % en poids, de préférence 30 à 80 % en poids, d'au moins une résine de polyoléfine sélectionnée dans le groupe constitué d'un homopolymère de propylène, d'un copolymère statistique d'a-oléfine-propylène, et d'un copolymère séquencé d'éthylène-propylène ; (B) 10 à 40 % en poids d'une résine de copolymère de caoutchouc d'éthylène-propylène ; et (C) 10 à 40 % en poids d'une résine de copolymère de caoutchouc d'a-oléfine en C₄ à C₈-éthylène, et qui présente un indice de fusion de 0,5 à 10 g/10 min quand il est mesuré à 230 °C sous une charge de 2,16 kg, une résistance à la flexion de 100 à 800 MPa, et une température de fusion de 140 à 170 °C,
dans laquelle la teneur totale des résines (B) et (C) est dans la plage de 20 à 70 % en poids,
dans laquelle la résine de polyoléfine (A) présente un indice de fusion de 1 à 10 g/10 min quand il est mesuré à 230 °C sous une charge de 2,16 kg, une résistance à la flexion de 500 à 2000 MPa, et une enthalpie de fusion de 40 à 100 J/g,
dans laquelle la teneur en éthylène dans la résine de copolymère de caoutchouc d'éthylène-propylène (B) est de 5 à 30 % en poids, et la teneur en propylène dans la résine de copolymère de caoutchouc d'éthylène-propylène (B) est de 70 à 95 % en poids, et
dans laquelle la résine de copolymère de caoutchouc d'a-oléfine en C₄ à C₈-éthylène (C) présente un indice de fusion de 0,5 à 20 g/10 min quand il est mesuré à 230 °C sous une charge de 2,16 kg, une résistance à la flexion de 100 MPa ou moins, et une enthalpie de fusion de 10 J/g ou moins.

2. Composition de résine de polyoléfine selon la revendication 1, dans laquelle le monomère d'a-oléfine, qui constitue le copolymère statistique d'a-oléfine-propylène, est au moins l'un sélectionné dans le groupe constitué de l'éthylène, du 1-butène, du 1-hexène et du 1-octène, de préférence est l'éthylène.

3. Composition de résine de polyoléfine selon la revendication 2, dans laquelle la teneur du monomère d'a-oléfine dans le copolymère statistique d'a-oléfine-propylène est de 2 à 20 % en poids dans le cas de l'éthylène et de 2 à 10 % en poids dans le cas du 1-butène.

4. Composition de résine de polyoléfine selon l'une quelconque des revendications 1 à 3, dans laquelle la teneur en éthylène dans le copolymère séquencé d'éthylène-propylène est de 2 à 25 % en poids, et la teneur en propylène dans le copolymère séquencé d'éthylène-propylène est de 75 à 98 % en poids.

5. Composition de résine de polyoléfine selon l'une quelconque des revendications 1 à 4, dans laquelle l'α-oléfine en C₄ à C₈, qui constitue la résine de copolymère de caoutchouc d'a-oléfine en C₄ à C₈-éthylène (C), est au moins l'un sélectionné dans le groupe constitué du 1-butène, du 1-pentène, du 1-hexène, du 1-heptène et du 1-octène, de préférence est le 1-butène, le 1-hexène ou le 1-octène.

6. Composition de résine de polyoléfine selon la revendication 5, dans laquelle la teneur du monomère d'a-oléfine en C₄ à C₈ dans la résine de copolymère de caoutchouc d'a-oléfine en C₄ à C₈-éthylène (C) est de 20 à 45 % en poids dans le cas du 1-butène, 10 à 30 % en poids dans le cas du 1-hexène, et 5 à 20 % en poids dans le cas du 1-octène.

7. Composition de résine de polyoléfine selon l'une quelconque des revendications 1 à 6, qui comprend un monomère de propylène en une quantité de 30 à 75 % en poids, un monomère d'éthylène en une quantité de 20 à 50 % en poids, et d'autres monomères d'a-oléfine en une quantité de 5 à 20 % en poids.

8. Composition de résine de polyoléfine selon l'une quelconque des revendications 1 à 7, qui comprend en outre au moins un additif sélectionné dans le groupe constitué d'un antioxydant, d'un agent de neutralisation, d'un agent de nucléation transparent et d'un stabilisant thermique de longue durée.

9. Composition de résine de polyoléfine selon la revendication 8, dans laquelle la teneur de l'additif est de 0,2 à 1 % en poids sur la base du poids total de la composition de résine de polyoléfine.

10. Composition de résine de polyoléfine selon l'une quelconque des revendications 1 à 9, qui présente une résistance aux chocs IZOD de 2,0 kgf cm/cm ou plus quand elle est mesurée à -40 °C.

11. Composition de résine de polyoléfine selon l'une quelconque des revendications 1 à 10, dans laquelle un extrait de solvant en tant que composant de caoutchouc dans la composition de résine de polyoléfine présente une viscosité intrinsèque de 1,0 à 4,0 dl/g.
